# FASCICULE DE BREVET EUROPEEN

(11) **EP 2 222 563 B1**
(45) Date de publication et mention de la délivrance du brevet: **28.02.2018**
(21) Numéro de dépôt: 08863496.9
(22) Date de dépôt: 10.12.2008
(51) Int. Cl.: B64D 45/02, H02G 13/00

(54) **SYSTÈME PARAFOUDRE ET AÉRONEF COMPORTANT UN TEL SYSTÈME**
BLITZSCHUTZSYSTEM UND FLUGZEUG MIT DERARTIGEM SYSTEM
ANTI-LIGHTNING SYSTEM AND AIRCRAFT COMPRISING SUCH A SYSTEM

(30) Priorité: 11.12.2007 FR 0759733
(43) Date de publication de la demande: 01.09.2010
(73) Titulaire: AIRBUS OPERATIONS (S.A.S), 31060 Toulouse (FR)
(72) Inventeur: LAMBERT, Charles, F-31300 Toulouse (FR); Bernus, Christophe, F-31000 Toulouse (FR); FOURNIE, Jacques, F-31330 Grenade (FR); MARTY, Jean-Claude, F-31190 Grepiac (FR)
(74) Mandataire: Gicquel, Olivier Yves Gérard
(86) Numéro de dépôt international: PCT/FR2008/052268
(87) Numéro de publication internationale: WO 2009/080990

(56) Documents cités:
- EP-A- 0 685 389
- EP-A- 0 790 182
- EP-A- 1 484 245
- WO-A-2006/069996
- US-A- 4 502 092

## Description

La présente invention concerne une structure composite comprenant un système parafoudre, en particulier des panneaux comportant une âme centrale légère telle qu'une âme en nid d'abeille ou en mousse. Elle est notamment adaptée à la protection contre le foudroiement du radôme ou du fuselage d'un aéronef.

Les structures sandwich en matériau composite présentent des propriétés, notamment mécaniques, exceptionnelles. Elles combinent une résistance élevée aux contraintes mécaniques et/ou thermiques et une forte rigidité pour une masse minimale.

Ces structures sont donc largement mises en oeuvre dans l'industrie spatiale (satellites, sondes, lanceurs) et dans l'industrie aéronautique (radôme, trappes, bords d'attaque, ailerons, etc.,...).

Toutefois, il est connu que ces structures sont vulnérables au foudroiement si elles ne sont pas proprement reliées à la masse. Les courants électriques de forte densité qui traversent alors ces structures composites peuvent endommager sérieusement celles-ci et conduire, par exemple, à un délaminage. Le cas du radôme est encore plus critique puisque par définition, il ne peut pas intégrer les dispositifs classiques d'écoulement du courant foudre, tels qu'un grillage métallique inséré dans la surface de structure, lesquels sont interdits de par les exigences de transparence vis-à-vis des ondes radar.

On connaît des moyens permettant de dissiper l'énergie de la foudre pour protéger ces structures en cas de foudroiement, par exemple dans le document WO 2006/069996. La Figure 1 montre un tel moyen de dissipation de l'énergie de la foudre de l'art antérieur. Des bandes parafoudres 1 typiquement en aluminium ou en cuivre sont disposées à la surface externe 2 du radôme 3 d'un avion. Ces bandes 1 sont fixées sur le radôme par des organes de fixation 4 du type vis. Chaque bande parafoudre 1 est électriquement reliée à la surface externe 2 du radôme 3 pour permettre l'écoulement des charges électrostatiques qui s'y accumulent. La pièce 5 dans laquelle la vis 4 vient se loger pour fixer la bande 1 est en plastique isolant.

Chaque bande 1 est également reliée à la jonction du fuselage de l'avion pour assurer sa mise individuelle à la masse. Ainsi un arc foudre frappant cette bande 1 voit son énergie évacuée vers la masse sans affecter aucun autre élément du radôme.

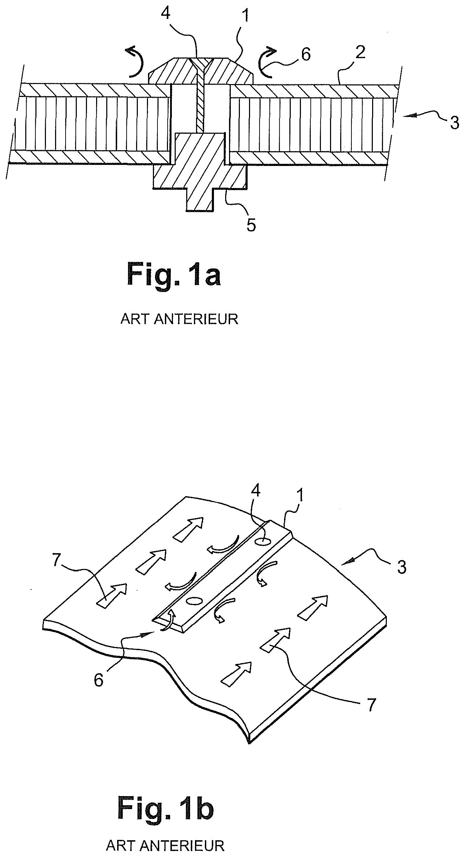

Bien que ce moyen de dissipation de l'énergie donne de bons résultats, il a été observé des perturbations 6 dans l'écoulement de l'air 7 incident sur le radôme 3, lesquelles sont causées par les saillies formées par les bandes parafoudres 1 à la surface externe 2 du radôme (Fig. 1b).

Or, le radôme lorsqu'il constitue le "nez" d'un avion a une forme généralement conique pour assurer une bonne pénétration dans l'air, et contribue, par conséquent, grandement à l'aérodynamisme de cet avion.

Ces perturbations aérodynamiques 6 génèrent une traînée augmentée notamment par le déclenchement de la transition de l'écoulement laminaire à turbulent, et par la même, une augmentation très sensible de la consommation en carburant de l'avion, ce qui est incompatible avec les exigences économiques des compagnies de transport aérien.

De plus, lors d'un foudroiement sévère d'une bande parafoudre, on peut observer un endommagement de celle-ci, avec par exemple une fusion superficielle de la vis de fixation de cette bande. La maintenance du radôme nécessite alors la dépose de celui-ci pour démonter et remplacer la bande endommagée.

Il serait donc intéressant de disposer d'un système de protection du radôme d'un avion contre la foudre permettant de réduire la traînée pour réaliser un gain de masse en carburant important tout en étant le plus transparent possible vis-à-vis des ondes radars.

L'objectif de la présente invention est donc de proproser une structure composite comprenant un système parafoudre, dont la surface externe est soumise à un écoulement d'air, simple dans sa conception et dans son mode opératoire, permettant de s'assurer d'une dissipation totale de l'énergie d'un impact foudre sans endommagement de la structure et sans perturbation dans l'écoulement d'air à proximité de cette pièce.

A cet effet, l'invention concerne une structure composite comprenant un système parafoudre, ayant une surface externe destinée à être soumise à un écoulement d'air, ledit système comprenant au moins une bande électriquement conductrice et des fixations de cette bande à cette structure.

Selon l'invention,
- cette structure comportant des trous destinés à recevoir les fixations de la bande, au moins certaines de ces fixations comprennent un élément d'attachement de la foudre à la structure,
- cet élément d'attachement est destiné à être inséré dans ce trou en ayant sa partie supérieure sensiblement au niveau de la surface externe de la structure, cet élément d'attachement étant en contact électrique avec la bande électriquement conductrice, et
- la bande électriquement conductrice est destinée à être placée du côté opposé de la structure à cette surface externe en étant reliée à la masse, et en ce que
- ledit système comporte une gaine électriquement isolante recouvrant ladite bande électriquement conductrice. On entend par "la bande électriquement conductrice est destinée à être placée du côté opposé de la structure à ladite surface externe" que cette bande électriquement conductrice est placée du coté de la surface de la structure opposée à ladite surface externe, c'est-à-dire du côté de la surface interne de la structure, en étant soit directement en contact avec cette surface interne, soit placée à distance de celle-ci.

On entend par "partie supérieure sensiblement au niveau de la surface externe de la structure" que cette partie supérieure est au même niveau que la surface externe de la structure, c'est à dire que l'extrémité supérieure de l'élément d'attachement est au niveau, ou contiguë, à la surface externe de la structure aux tolérances d'assemblage près.

Ce système peut avantageusement être mis en oeuvre sur tout type de structure composite, qu'elle soit monolithique, simple sandwich ou multi-sandwich.

Dans différents modes de réalisation particuliers de ce système parafoudre, chacun ayant ses avantages particuliers et susceptibles de nombreuses combinaisons techniques possibles:
- l'élément d'attachement de la foudre à la structure est un plot conducteur monobloc comprenant dans sa partie inférieure une portion de tige filetée, cette portion étant destinée à passer au travers d'un perçage de la bande,
Bien entendu, ce perçage peut être un trou taraudé de sorte que la portion de tige filetée du plot ne fait pas saillie de la bande électriquement conductrice tout en assurant sa fonction de fixation de ladite bande. Une gaine électriquement isolante qui serait placée autour de la bande épouserait alors parfaitement la partie inférieure de celle-ci.
- la bande conductrice électriquement ayant une épaisseur e et une largeur I, la section de la tige filetée est au moins égale à I x e,
De préférence, la section de la tige filetée est égale à la section de la bande électriquement conductrice. Le diamètre de la tige filetée est au minimum de 6,35 mm afin de conduire efficacement le courant foudre.
- le système comporte un insert isolant comprenant un corps principal et éventuellement une tête, le corps principal comprenant un évidement apte à recevoir l'élément d'attachement de la foudre,
Cet insert isolant permet d'assurer la liaison mécanique entre la structure composite, l'élément d'attachement de la foudre à cette structure et la bande électriquement conductrice.
- le système comporte une gaine électriquement isolante destinée à recouvrir la bande électriquement conductrice,
Le système comporte alors de préférence une pâte non conductrice destinée à former une gangue enveloppant au moins la bande électriquement conductrice et sa gaine isolante.
- le système comporte des pastilles conductrices électriquement destinées à être placées dans des logements sur la surface externe de la structure, ces logements étant sensiblement alignés et régulièrement espacés ou non entre deux fixations consécutives pour faciliter le balayage de l'arc foudre entre les éléments d'attachement de la foudre à la structure,
- le système comporte un grillage métallique destiné à être intégré dans l'épaisseur de la paroi délimitant la surface externe de ladite structure, ce grillage étant alors destiné à être en contact électrique avec les éléments d'attachement de la foudre.

L'invention concerne une structure composite ayant une surface externe destinée à être soumise à un écoulement d'air. Selon l'invention, cette structure composite est équipée d'un système parafoudre tel que décrit précédemment et la surface externe de cette structure composite avec laquelle la partie supérieure dudit élément d'attachement est placée sensiblement au même niveau est non métallique.

En conséquence, cette structure composite comprend au moins une bande électriquement conductrice et des fixations de cette bande à la structure, lesquelles sont reçues dans des trous de la structure composite qui sont prévus à cet effet. Au moins certaines de ces fixations comprennent un élément d'attachement de la foudre à la structure, cet élément d'attachement étant inséré dans un trou correspondant en ayant sa partie supérieure sensiblement au niveau de la surface externe de la structure. Cet élément d'attachement est de plus en contact électrique avec la bande électriquement conductrice, laquelle est placée du côté opposé de la structure à cette surface externe en étant reliée à la masse.

On entend par "partie supérieure sensiblement au niveau de la surface externe de la structure" que cette partie supérieure est au même niveau que la surface externe de la structure, c'est à dire que l'extrémité supérieure de l'élément d'attachement est au niveau, ou contiguë, à la surface externe de la structure aux tolérances d'assemblage près.

Dans différents modes de réalisation particuliers de cette structure composite, chacun ayant ses avantages particuliers et susceptibles de nombreuses combinaisons techniques possibles :
- les éléments d'attachement de cette bande électriquement conductrice sont disposés sous forme d'une bande,
- les éléments d'attachement sont sensiblement alignés en étant espacés régulièrement ou non,
Cet alignement des éléments d'attachement permet avantageusement de limiter la surface des éléments susceptibles de former une barrière radioélectrique vis-à-vis des ondes radars pour un radôme équipé d'un tel système parafoudre.
- cette structure est monolithique ou comprend au moins deux parois disposées respectivement sur des faces opposées externes d'une âme,
- la structure composite comporte des pastilles électriquement conductrices placées dans des logements sur la surface externe de cette structure, ces logements étant sensiblement alignés et régulièrement espacés ou non entre deux fixations consécutives pour faciliter le balayage de l'arc foudre entre les éléments d'attachement de la foudre à la structure,
- la structure est en matériau isolant et comporte uniquement lesdits éléments d'attachement de la foudre, ladite bande électriquement conductrice et éventuellement lesdites pastilles comme éléments conducteurs,
Ainsi, lorsque la structure composite est impactée par la foudre, le courant chemine en surface sans transpercer cette structure jusqu'à rejoindre les éléments d'attachement et la bande électriquement conductrice associée les plus proches. De plus, la présence d'éléments susceptibles de former une barrière radioélectrique vis-à-vis des ondes radars est limitée au maximum.
- la structure composite comporte pour chaque élément d'attachement de la foudre, un insert isolant comprenant un corps principal et éventuellement une tête, le corps principal comprenant un évidement recevant l'élément d'attachement de la foudre,
Cet insert isolant permet d'assurer la liaison mécanique entre la structure composite, l'élément d'attachement de la foudre à cette structure et la bande électriquement conductrice.
- la structure composite comporte une gaine électriquement isolante destinée à recouvrir la bande électriquement conductrice.

L'invention concerne également un panneau comprenant au moins une structure composite monolithique telle que décrite précédemment.

On entend par "monolithique", une feuille ou plaque à pli unique ou composé de plusieurs plis associés ou solidarisés directement les uns aux autres, sans interposition d'une âme légère tel qu'en matériau alvéolaire, comme dans le cas de la structure sandwich.

Dans un mode de réalisation particulier, ce panneau composite monolithique comporte une première peau formant la paroi externe du panneau et une seconde peau formant la partie interne du panneau. Les peaux constituant le panneau sont, par exemple, réalisées en matériaux composites.

L'invention concerne encore un panneau comprenant au moins deux parois disposées respectivement sur des faces opposées externes d'une âme, ce panneau étant équipé d'un système parafoudre tel que décrit précédemment.

L'âme peut être en matériau alvéolaire tel qu'un nid d'abeille, ou en mousse.

L'invention concerne un radôme équipé d'au moins un panneau tel que décrit précédemment.

L'invention concerne un aéronef équipé d'au moins un panneau tel que décrit précédemment.

De manière plus générale, l'invention concerne un procédé de montage d'un système parafoudre sur une structure composite ayant une surface externe destinée à être soumise à un écoulement d'air, ledit système comprenant au moins une bande électriquement conductrice et des fixations de cette bande à ladite structure.

Selon l'invention, on monte ladite bande électriquement conductrice du côté opposé de la structure à cette surface externe.

De préférence, au moins certaines desdites fixations comprenant un élément d'attachement de la foudre à la structure et ladite structure comportant des trous destinés à recevoir ces fixations, on place lesdits éléments d'attachement dans lesdits trous de sorte que la partie supérieure de chaque élément d'attachement soit placée sensiblement au niveau de la surface externe de la structure, ces éléments d'attachement étant en contact électrique avec la bande électriquement conductrice et cette surface externe étant non métallique.

L'invention sera décrite plus en détail en référence aux dessins annexés dans lesquels:
- la figure 1 montre un exemple de moyen de dissipation de l'énergie de la foudre de l'art antérieur monté sur un panneau d'un radôme, la Fig. 1a) montrant une vue en coupe de ce panneau et la Fig. 1b), une vue partielle en perspective de ce panneau schématisant les écoulements d'air à sa surface;
- la figure 2 est une représentation schématique en coupe d'un panneau équipé d'un système parafoudre selon un premier mode de réalisation de l'invention;
- la figure 3 est une vue partielle et en perspective montrant les écoulements d'air à la surface du panneau de la Figure 2;
- la figure 4 est une représentation schématique en coupe d'un panneau équipé d'un système parafoudre selon un deuxième mode de réalisation de l'invention;
- la figure 5 est une représentation schématique d'un panneau équipé d'un système parafoudre selon un troisième mode de réalisation de l'invention;

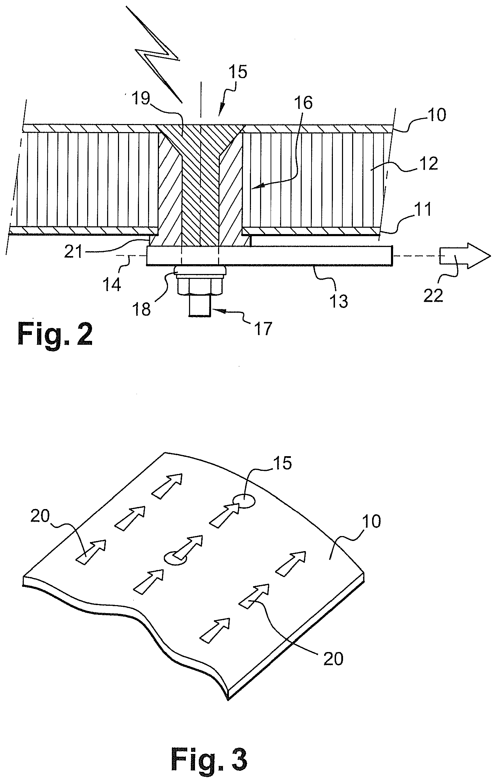

Les Figures 2 et 3 montrent un panneau équipé d'un système parafoudre selon un premier mode de réalisation de l'invention. Le panneau comporte une structure sandwich de coeur comprenant deux parois 10, 11 disposées respectivement sur des faces opposées externes d'une âme en nid d'abeilles 12.

Ces parois 10, 11 sont des armatures en composite. Les composites peuvent être choisis dans le groupe, donné à titre non limitatif, comprenant les composites de verre, les composites de silice, les composites de carbure de silicium, les composites de quartz, les composites de basalte, les fibres aramides ou tout autre composite ayant des propriétés diélectriques adaptées.

L'âme en nid d'abeilles 12 est, par exemple, réalisée à partir d'aramide. Les fibres d'aramide présentent, en effet, une faible inflammabilité, une grande résistance à la rupture et un haut module d'élasticité.

Ce panneau est un élément constitutif d'un radôme et sa paroi supérieure 10, dite paroi externe, est destinée à être exposée à un écoulement d'air.

Le panneau est équipé d'un système parafoudre comprenant une bande électriquement conductrice 13 ayant un axe longitudinal 14 et des fixations de cette bande 13 au panneau.

La section des bandes électriquement conductrices 13 est conditionnée par deux critères, à savoir le choix du matériau utilisé et l'impact de la présence de ces bandes sur les performances radioélectriques. A titre purement illustratif, un état de l'art du minimum exigé permettant un bon passage du courant de foudre dans la bande est de 20 mm² pour des bandes en cuivre et de 30 mm² pour des bandes en aluminium.

Dans un mode de mise en oeuvre particulier, un dimensionnement typique de la bande en cuivre sera une section rectangulaire s de largeur l = 8 mm par une épaisseur e =2,5 mm (s = l x e = 20 mm²).

De manière plus générale, le passage en interne des bandes électriquement conductrices autorise une augmentation de leurs épaisseurs qui peuvent être, par conséquent, plus étroites. Les bandes 13 présentent donc une section s suffisante pour un bon passage du courant tout en présentant une épaisseur e et une largeur l qui permettent une amélioration de la transparence radioélectrique du radôme par une diminution de la section des bandes vue de l'antenne radar.

Les fixations comprennent chacune un élément d'attachement 15 de la foudre au panneau inséré dans un trou prévu à cet effet dans l'épaisseur du panneau.

L'élément d'attachement 15 de la foudre au panneau est ici un plot conducteur monobloc comprenant dans sa partie inférieure une portion de tige filetée 17. Cette portion de tige filetée 17 est destinée à passer au travers d'un perçage de la bande électriquement conductrice 13 de sorte qu'un écrou 18 faisant partie des fixations et venant en appui sur la face opposée de cette bande assure sa fixation. L'élément d'attachement 15 est par conséquent en contact électrique avec la bande électriquement conductrice 13.

Ce plot conducteur 15 comporte une portion cylindrique intermédiaire reliant la partie inférieure 17 à sa partie supérieure 19. Cette partie supérieure 19 présente la forme d'un tronc de cône inversé de sorte que la base de cette partie tronconique forme la surface externe supérieure du plot conducteur. Le plot conducteur 15 peut être réalisé dans un matériau métallique choisi dans le groupe comprenant le cuivre, l'acier inoxydable et l'aluminium.

Le plot conducteur 15 est placé dans le trou du panneau de sorte que sa partie supérieure 19 affleure avec la paroi externe 10 du panneau, c'est-à-dire que cette surface externe supérieure soit de même niveau que la surface externe 10 du panneau. Ainsi, un écoulement d'air incident 20 sur le panneau ne "voit" qu'une surface sensiblement uniforme et cet écoulement peut ainsi rester laminaire (Figure 3).

Afin d'empêcher toute contrainte sur la structure interne du panneau et pour isoler en partie le plot conducteur 15 de l'antenne radar que protège le radôme, le plot conducteur 15 est reçu au moins en partie dans un insert 16 servant d'élément isolant. Cet insert 16 peut être réalisé par exemple en plastique isolant tel qu'une résine acétal. Le Delrin® commercialisé par la société Dupont de Nemours est particulièrement adapté à la présente invention.

Cet insert 16 comprend un corps principal et une tête 21 destinée à former une interface mécanique isolante entre la paroi inférieure 11 du panneau et la bande électriquement conductrice 13. Le corps principal présente un évidement interne de forme adaptée au profil du plot conducteur 15.

La bande électriquement conductrice 13 est donc placée du côté interne au panneau de sorte que cette bande se trouve placée à l'intérieur du radôme et ne vient plus perturber l'écoulement de l'air sur la surface externe du panneau.

Les plots conducteurs 15 assurant la fixation de la bande électriquement conductrice 13 sont de préférence placés le long de l'axe longitudinal 14 de celle-ci. Cette dernière est reliée 22 à la masse du fuselage de l'avion, au niveau de la base du radôme.

La bande électriquement conductrice 13 est avantageusement entourée d'une gaine électriquement isolante (non représentée) de manière à empêcher d'éventuels attachements d'arc électrique sur les éléments sous-jacents au radôme (antenne radar ou autre). Cette gaine électriquement isolante est, à titre purement illustratif, une gaine thermoplastique ou en téflon.

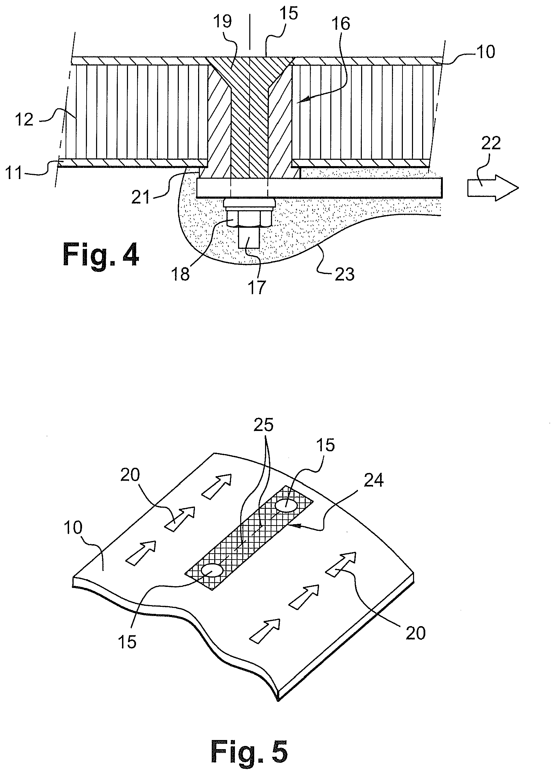

La figure 4 est une vue en coupe d'un panneau équipé d'un système parafoudre selon un mode de réalisation préféré de l'invention. Les éléments portant les mêmes références que ceux de la Figure 2 représentent les mêmes objets. Le panneau de la figure 4 se différencie de celui de la Figure 2 en ce que la portion de tige filetée 17 des plots métalliques 15, les têtes 21 des inserts, les écrous 18, les bandes électriquement conductrices 13 et leur gaine isolante sont placés dans une gangue 23 formée par une pâte non conductrice telle qu'une pâte chargée de particules isolantes. Dans ce dernier cas, il peut s'agir d'une pâte siliconée.

La figure 5 est une vue partielle et en perspective d'un panneau équipé d'un système parafoudre selon un troisième mode de réalisation de l'invention. Les éléments portant les mêmes références que ceux de la Figure 2 représentent les mêmes objets. Le panneau de la figure 5 se distingue de celui de la Figure 2 en ce que la paroi 10 délimitant la surface externe du panneau comporte un grillage métallique 24 dans son épaisseur. Ce grillage 24 est en contact électrique avec les éléments d'attachement 15 de la foudre au panneau.

Typiquement, la peau 10 comportant un ensemble de plis, le grillage métallique 24 est placée sous le premier pli externe de cette peau en s'étendant longitudinalement le long de la bande électriquement conductrice 13. Ce grillage 24 peut être réalisé en bronze.

Le système parafoudre peut en outre comporter une ou plusieurs bandes à pastilles 25 comportant chacune une juxtaposition de pastilles électriquement conductrices telles que des pastilles métalliques, de faibles dimensions, typiquement 5 mm de diamètre, sensiblement alignées et espacées d'un petit entrefer, couramment 1 à 3 mm.

Chaque bande à pastilles placée entre deux éléments d'attachement 15 de la foudre au panneau, permet un guidage le l'arc foudre par ionisation de l'air entre chaque pastille.

## Revendications

1. Structure composite comprenant un système parafoudre, la dite structure ayant une surface externe (10) destinée à être soumise à un écoulement d'air (20), ledit système comprenant au moins une bande électriquement conductrice (13) et des fixations de ladite bande à ladite structure, en ce que
- ladite structure comportant des trous destinés à recevoir lesdites fixations, au moins certaines desdites fixations comprennent un élément d'attachement (15) de la foudre à ladite structure,
- ledit élément d'attachement (15) est destiné à être inséré dans ledit trou en ayant sa partie supérieure (19) sensiblement au niveau de la surface externe (10) de ladite structure, ledit élément d'attachement (15) étant en contact électrique avec ladite bande électriquement conductrice (13),
- ladite bande électriquement conductrice (13) est destinée à être placée du côté opposé (11) de la structure à ladite surface externe (10) en étant reliée à la masse, et **caractérisé en ce que**
- ledit système comporte une gaine électriquement isolante recouvrant ladite bande électriquement conductrice (13).

2. Structure selon la revendication 1, **caractérisé en ce qu'**elle comporte une pâte non conductrice destinée à former une gangue (23) enveloppant au moins ladite bande électriquement conductrice (13) et sa gaine isolante.

3. Structure selon la revendication 1 ou 2, **caractérisé en ce qu'**elle comporte des pastilles électriquement conductrices (25) destinées à être placées dans des logements sur la surface externe (10) de ladite structure, lesdits logements étant sensiblement alignés et régulièrement espacés ou non entre deux fixations consécutives pour faciliter le balayage de l'arc foudre entre lesdits éléments d'attachement (15) de la foudre à ladite structure.

4. Structure selon l'une quelconque des revendications 1 à 3, **caractérisé en ce qu'**elle comporte un grillage métallique (24) destiné à être intégré dans l'épaisseur de la paroi (10) délimitant la surface externe de ladite structure, ledit grillage (24) étant alors destiné à être en contact électrique avec lesdits éléments d'attachement (15) de la foudre.

5. Structure selon l'une quelconque des revendications 1 à 4, **caractérisé en ce que** ledit élément d'attachement (15) de la foudre à la structure est un plot conducteur monobloc comprenant dans sa partie inférieure une portion de tige filetée (17), ladite portion étant destinée à passer au travers d'un perçage de ladite bande électriquement conductrice (13).

6. Structure selon l'une quelconque des revendications 1 à 5, **caractérisée en ce que** la surface externe (10) de ladite structure composite avec laquelle la partie supérieure dudit élément d'attachement (15) est placée sensiblement au même niveau est non métallique.

7. Structure selon la revendication 6, **caractérisée en ce que** lesdits éléments d'attachement (15) de ladite bande électriquement conductrice (13) sont disposés sous forme d'une bande.

8. Structure selon la revendication 6 ou 7, **caractérisée en ce que** lesdits éléments d'attachement (15) sont sensiblement alignés en étant espacés régulièrement ou non.

9. Structure selon l'une quelconque des revendications 6 à 8, **caractérisée en ce que** ladite structure est monolithique ou comprend au moins deux parois (10, 11) disposées respectivement sur des faces opposées externes d'une âme (12).

10. Structure selon l'une quelconque des revendications 6 à 9, **caractérisée en ce que** ladite structure est en matériau isolant et **en ce qu'**elle comporte uniquement lesdits éléments d'attachement (15) de la foudre, ladite bande électriquement conductrice (13) et éventuellement lesdites pastilles (22) comme éléments conducteurs.

11. Panneau comprenant au moins une structure composite selon l'une quelconque des revendications 6 à 10.

12. Radôme équipé d'au moins un panneau selon la revendication 11.

13. Aéronef équipé d'au moins un panneau selon la revendication 11.

## Patentansprüche

1. Verbundstruktur, die ein Blitzschutzsystem umfasst, wobei die Struktur eine äußere Fläche (10), die dazu bestimmt ist, einer Luftströmung (20) ausgesetzt zu sein, aufweist, das System umfassend mindestens ein elektrisch leitendes Band (13) und Befestigungen des Bandes an der Struktur, indem
- die Struktur umfassend Löcher zur Aufnahme der Befestigungen, zumindest einige der Befestigungen ein Element zur Bindung (15) des Blitzes an die Struktur umfassen,
- das Element zur Bindung (15) dazu bestimmt ist, in das Loch eingeführt zu werden, wobei sich sein oberer Teil (19) im Wesentlichen auf der Ebene der äußeren Fläche (10) der Struktur befindet, wobei das Element zur Bindung (15) mit dem elektrisch leitenden Band (13) in elektrischem Kontakt steht,
- das elektrisch leitende Band (13) dazu bestimmt ist, auf der gegenüberliegenden Seite (11) der Struktur an der äußeren Fläche (10) angeordnet zu sein, wobei es mit der Masse verbunden ist, und **dadurch gekennzeichnet, dass**
- das System einen elektrisch isolierenden Mantel umfasst, der das elektrisch leitende Band (13) bedeckt.

2. Struktur nach Anspruch 1, **dadurch gekennzeichnet, dass** sie eine nichtleitende Paste umfasst, die dazu bestimmt ist, eine Hülle (23) zu bilden, die zumindest das elektrisch leitende Band (13) und dessen Isoliermantel umhüllt.

3. Struktur nach Anspruch 1 oder 2, **dadurch gekennzeichnet, dass** sie elektrisch leitende Plättchen (25) umfasst, die dazu bestimmt sind, in Aufnahmen auf der äußeren Fläche (10) der Struktur angeordnet zu sein, wobei die Aufnahmen im Wesentlichen zwischen zwei aufeinanderfolgenden Befestigungen ausgerichtet und gleichmäßig beabstandet sind oder nicht, um die Abtastung des Blitzbogens zwischen den Elementen zur Bindung (15) des Blitzes an der Struktur zu erleichtern.

4. Struktur nach einem der Ansprüche 1 bis 3, **dadurch gekennzeichnet, dass** sie ein Drahtgeflecht (24) umfasst, das dazu bestimmt ist, in der Dicke der Wand (10), die die äußere Fläche der Struktur begrenzt, integriert zu sein, wobei dann das Geflecht (24) dazu bestimmt ist, in elektrischem Kontakt mit den Elementen zur Bindung (15) des Blitzes zu stehen.

5. Struktur nach einem der Ansprüche 1 bis 4, **dadurch gekennzeichnet, dass** das Element zur Bindung (15) des Blitzes an die Struktur eine einstückige Kontaktfläche ist, die in ihrem unteren Teil einen Gewindestiftabschnitt (17) umfasst, wobei der Abschnitt dazu bestimmt ist, durch eine Bohrung des elektrisch leitenden Bands (13) hindurchzugehen.

6. Struktur nach einem der Ansprüche 1 bis 5, **dadurch gekennzeichnet, dass** die äußere Fläche (10) der Verbundstruktur, mit der der obere Teil des Elements zur Bindung (15) im Wesentlichen auf derselben Ebene angeordnet ist, nicht metallisch ist.

7. Struktur nach Anspruch 6, **dadurch gekennzeichnet, dass** die Elemente zur Bindung (15) des elektrisch leitenden Bands (13) in Form eines Bands angeordnet sind.

8. Struktur nach Anspruch 6 oder 7, **dadurch gekennzeichnet, dass** die Elemente zur Bindung (15) im Wesentlichen ausgerichtet sind, indem sie gleichmäßig beabstandet sind oder nicht.

9. Struktur nach einem der Ansprüche 6 bis 8, **dadurch gekennzeichnet, dass** die Struktur einstückig ist oder mindestens zwei Wände (10, 11) umfasst, die jeweils auf gegenüberliegenden äußeren Seiten einer Seele (12) angeordnet sind.

10. Struktur nach einem der Ansprüche 6 bis 9, **dadurch gekennzeichnet, dass** die Struktur aus einem isolierenden Material ist und dadurch, dass sie nur die Elemente zur Bindung (15) des Blitzes, das elektrisch leitende Band (13) und eventuell die Plättchen (22) als Leitelemente umfasst.

11. Platte, umfassend mindestens eine Verbundstruktur nach einem der Ansprüche 6 bis 10.

12. Radom, das mit mindestens einer Platte nach Anspruch 11 ausgerüstet ist.

13. Luftfahrzeug, das mit mindestens einer Platte nach Anspruch 11 ausgerüstet ist.

## Claims

1. Composite structure comprising a lightning protection system, said structure having an outer surface (10) intended to be subjected to a flow of air (20), said system comprising at least one electrically conductive strip (13) and means for fastening said strip to said structure,
- said structure including holes that are intended to receive said fastening means, at least some of said fastening means comprise an element (15) for drawing lightning to said structure,
- said drawing element (15) is intended to be inserted into said hole while having its upper part (19) substantially level with the outer surface (10) of said structure, said drawing element (15) being in electrical contact with said electrically conductive strip (13),
- said electrically conductive strip (13) is intended to be positioned on the side (11) of the structure opposite said outer surface (10) while being linked to ground, and **characterized in that**
- said system includes an electrically insulating sleeve covering said electrically conductive strip (13).

2. Structure according to Claim 1, **characterized in that** it includes a non-conductive paste intended to form a gangue (23) surrounding at least said electrically conductive strip (13) and its insulating sleeve.

3. Structure according to Claim 1 or 2, **characterized in that** it includes electrically conductive pellets (25) intended to be positioned in recesses on the outer surface (10) of said structure, said recesses being substantially aligned and spaced apart regularly, or not, between two consecutive fastening means in order to facilitate the sweeping of the lightning arc between said elements (15) for drawing lightning to said structure.

4. Structure according to any one of Claims 1 to 3, **characterized in that** it includes a metal mesh (24) intended to be integrated into the thickness of the wall (10) delineating the outer surface of said structure, said mesh (24) then being intended to be in electrical contact with said elements (15) for drawing lightning.

5. Structure according to any one of Claims 1 to 4, **characterized in that** said element (15) for drawing lightning to the structure is a single-piece conductive pad comprising, in its lower part, a threaded rod portion (17), said portion being intended to pass through a piercing in said electrically conductive strip (13).

6. Structure according to any one of Claims 1 to 5, **characterized in that** the outer surface (10) of said composite structure with which the upper part of said drawing element (15) is positioned substantially at the same level is non-metallic.

7. Structure according to Claim 6, **characterized in that** said drawing elements (15) of said electrically conductive strip (13) are arranged in the form of a strip.

8. Structure according to Claim 6 or 7, **characterized in that** said drawing elements (15) are substantially aligned while being spaced apart regularly, or not.

9. Structure according to any one of Claims 6 to 8, **characterized in that** said structure is monolithic or comprises at least two walls (10, 11) that are positioned respectively on opposing outer faces of a core (12).

10. Structure according to any one of Claims 6 to 9, **characterized in that** said structure is made from insulating material and **in that** it includes, as conductive elements, only said elements (15) for drawing lightning, said electrically conductive strip (13) and possibly said pellets (22).

11. Panel comprising at least one composite structure according to any one of Claims 6 to 10.

12. Radome equipped with at least one panel according to Claim 11.

13. Aircraft equipped with at least one panel according to Claim 11.
